# NEW EUROPEAN PATENT SPECIFICATION

(11) **EP 2 723 625 B2**
(45) Date of publication and mention of the opposition decision: **04.11.2026**
(45) Mention of the grant of the patent: 09.08.2017
(21) Application number: 12802449.4
(22) Date of filing: 21.06.2012
(51) Int. Cl.: B62D 6/00, B60W 50/16, B62D 5/04, B62D 1/04, B62D 1/06

(54) **SENSOR SYSTEM FOR STEERING WHEEL FOR VEHICLE**
SENSORSYSTEM FÜR EIN FAHRZEUGLENKRAD
SYSTÈME DE CAPTEUR POUR VOLANT DE VÉHICULE

(30) Priority: 22.06.2011 US 201161500056 P
(43) Date of publication of application: 30.04.2014
(73) Proprietor: TK Holdings Inc., Auburn Hills, MI 48326 (US)
(72) Inventor: BENNETT, Jeff, Brownstown, Michigan 48134 (US); CECH, Leonard Steven, Brighton, Michigan 48116 (US); KRAUSE, Joseph Kae, Northville, Michigan 48168 (US)
(74) Representative: Fischer, Uwe
(86) International application number: PCT/US2012/043578
(87) International publication number: WO 2012/177902

(56) References cited:
- EP-A1- 0 545 497
- WO-A1-2009/083956
- WO-A1-2010/037894
- DE-U1- 20 309 603
- DE-U1- 20 309 877
- JP-A- 2007 299 048
- JP-A- 2008 059 459
- JP-A- 2008 087 566
- JP-A- 2008 265 528

## Description

### BACKGROUND

The present disclosure relates generally to the field of vehicles. The present disclosure more specifically relates to a sensor system in a steering wheel of a vehicle.

Current steering wheel sensor systems which detect hand placement on the steering wheel do not include a way to determine which way the wheel is being controlled (e.g., via a hold, grasp, touch, etc.). Such systems often utilize electric redistribution sensors, where an electric field is induced in a sensor electrode with an accurate voltage, current and frequency profile. Objects within proximity (such as human hands or body parts) tend to redistribute the electric field intensity and phase, resulting in the change of complex impedance as measured within the electric field circuit. The complex impedance can be a capacitance, an inductance, a resistance, or a combination thereof (e.g., a sensor that measures a capacitance component and an inductive component as I and Q components, respectively). What is needed is a system and method for determining when the steering wheel is being controlled through a grasp (e.g., when a hand palm skin surface engages the majority (or all) of the perimeter of the steering wheel rim or spokes).

DE 203 09 877 U1 being the closest prior art describes a vehicle safety system with a vehicle steering wheel, which has a steering wheel rim, and with at least one capacitive sensor which detects an alteration to an electric or electromagnetic field, the sensor is arranged in or on the steering wheel rim.

### BRIEF DESCRIPTION OF THE DRAWINGS

The features, aspects, and advantages of the present invention will become apparent from the following description and accompanying exemplary embodiments shown in the drawings, which are briefly described below.
Figure 1A illustrates a sensor system that detects a finger contact or tap or hand grasp on a steering wheel according to one or more embodiments, in which a cross sectional view of the steering wheel is shown.
Figure 1B shows a different cross sectional view of the steering wheel of the sensor system of Figure 1A.
Figure 2 illustrates a sensor system that detects a hand grasp on a steering wheel according to one or more embodiments.
Figure 3A illustrates a sensor system that uses small sub sensors to detect a finger contact or a hand grasp on a steering wheel according to one or more embodiments, in which a cross sectional view of the steering wheel is shown.
Figure 3B shows a different cross sectional view of the steering wheel of the sensor system of Figure 3A.
Figure 4 is a flow diagram of a method of detecting different types of contact with a steering wheel according to one or more embodiments.

### SUMMARY OF THE INVENTION

Embodiments of the invention are defined in the appended claims.

### DETAILED DESCRIPTION

Complex impedance (e.g., capacitance and inductance, or capacitance and resistance, or inductance and resistance) sensors may be used in vehicle environments (e.g., in the steering wheel of the vehicle) to determine if and where a user (e.g., a driver) of the vehicle is touching the steering wheel. One or more embodiments describe a way to improve the ability of a sensor system including the complex impedance sensors to determine reliably and repeatedly the characteristics of how the driver is controlling the steering wheel. The sensor system determines such characteristics through applied counter forces applied by the driver's body parts on the steering wheel. The sensor system of one or more embodiments distinguishes between a "hands on the wheel" state (e.g., the driver's hands firmly grasping the steering wheel) from other scenarios in which the driver controls the steering wheel through other body parts, the driver inadvertently touches the steering wheel, the driver taps the steering wheel instead of holding or grasping the steering wheel, etc. Further, the sensor system can be used to estimate the applied steering control force of the driver's hands (e.g., the force applied to the steering wheel by the driver) based on hand position or hand location, the number of sensing elements acted on in the steering wheel, and surface area of the hand (or other body parts) applied to the steering wheel. The sensor system may use the signal characteristics of the impedance sensor experiencing a "tap" function to control a vehicle control state switch.

The sensor system may distinguish between various possible control scenarios and other scenarios (e.g., control states). One control state the sensor system may distinguish is if the driver is holding (e.g., grasping) the steering wheel spoke with a hand. A measure of the degree to which the spoke is actually being controlled through the grasp may be made (e.g., via determining the number of hand control points and the percentage of the hand touching each sensor point).

Another control state the sensor system may distinguish is if the driver is holding (e.g., grasping) the steering wheel rim with a hand. A measure of the degree to which the wheel is actually being controlled through the grasp may be made (e.g., via determining the number of hand control points and the percentage of the hand touching each sensor point).

Another control state the sensor system may distinguish is if the driver is restraining the steering wheel using a body part other than the hand (e.g., a finger, knee, stomach, forearm, or another body part). The sensor system can distinguish that there is no grasp on the steering wheel associated with the body part.

Another control state the sensor system may distinguish is if the driver "taps" the steering wheel, indicating a request to change a control state of the vehicle. The sensor system may distinguish between such a tap, an inadvertent touching of the steering wheel, and a hold or grasp event described above.

The sensor system according to one or more embodiments includes complex impedance sensor elements provided on or within the steering wheel rim and/or spokes. The sensor elements are arranged in the steering wheel such that the raw and/or signal conditions of the sensor element signal or derivative(s) of the signal can be used directly and/or compared in an algorithm to determine steering wheel states (e.g., "hands on the wheel", the steering wheel being operated by another body part, the steering wheel being tapped, etc.). The position, size, and sensitivity of the sensor elements can be configured in such a way as to distinguish between control states.

A complex impedance sensor may output in-phase and quadrature components of a current based on sensed capacitance and sensed inductance of an object being sensed (e.g., a finger of a human hand or a palm of a human hand). Such types of complex impedance sensors are described in U.S. Patent Publication 2007/0192007, which is assigned to the same assignee as this application.

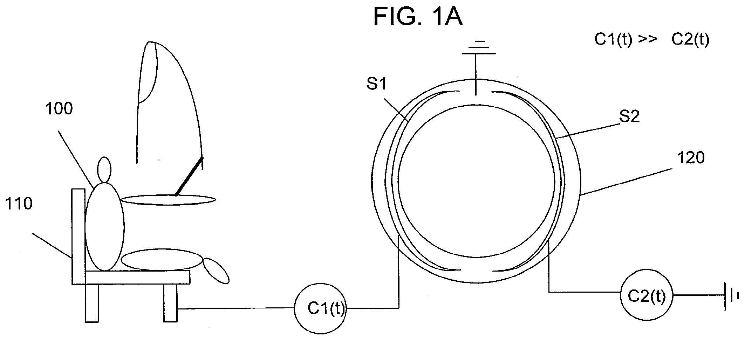

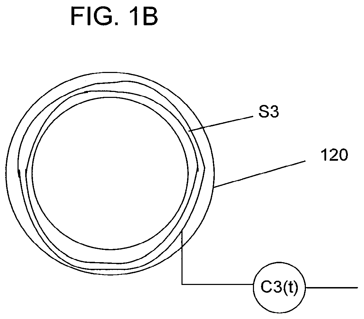

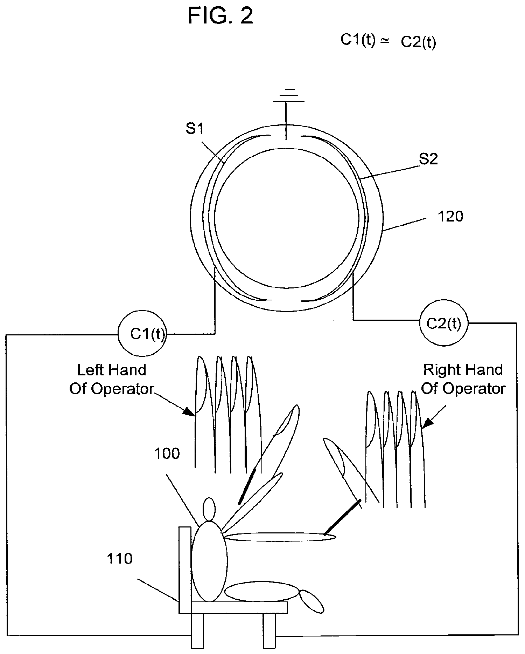

Referring to Figures 1A, 1B and 2, which show a steering wheel sensor system according to some embodiments with a steering wheel 120 in cross-sectional view, possible sensor element locations are shown in greater detail. Referring to Figures 1A and 1B, three sensor elements S1, S2 and S3 are shown, whereby the cross section view of Figure 1B is closer to the back of the steering wheel (that is, further from a driver's seat within a passenger compartment) than the cross section view of Figure 1A. The sensor elements S1, S2 and S3 are positioned on a steering wheel rim surface and are isolated electronically using one or more separate sensors or shields (not shown). The shield may be optional if there is a need to isolate the sensor elements, heater elements, and other elements within the steering wheel. In Figure 1A, the sensor elements S1 and S2 are installed in between the steering wheel cover (e.g. a leather or plastic material, etc.) and the interior of the steering wheel (e.g., foam, armature, etc.), to detect contact with a front left side surface and a front right side surface of the steering wheel, respectively. In Figure 1B, the sensor element S3 is disposed in the rear of the first and sensor elements S1, S2, to detect contact with a rear surface of the steering wheel 120. In the embodiment of Figures 1A and 1B, the driver 100 tapping or touching the front surface of the left side of the steering wheel 120 as viewed in a direction of the driver's seat will induce a impedance signal change from the first sensor element S 1 as the driver's body and seat assembly 110 is coupled into the circuit. The tap will induce little signal in the second sensor element S2 that is disposed on the right side of the steering wheel as viewed in a direction of the driver's seat, and it will induce little signal in the third sensor element S3 that is disposed in the back of the first and second sensor elements S1, S2 to detect contact with the back surface of the steering wheel 120. The sensor system may compare the impedance values C1(t), C2(t) and C3(t) of the sensor elements S1, S2 and S3 to determine that the driver 100 is tapping the steering wheel 120 (instead of, for example, grasping the steering wheel 120) and what portion of the steering wheel the driver is tapping (e.g., front left, front right, or back).

When the driver 100 is making contact with the first sensor S1, the impedance value C1(t) of the first sensor S1 increases from its non-contact state impedance value. As such, when the impedance value C1(t) is determined to be much greater than the impedance value C2(t) of the second sensor S2, this indicates that the driver 100 is contacting only the front left side surface of the steering wheel 120, and not the front right side surface of the steering wheel 120. In this state, the second sensor S2 is connected to ground at both ends, and the first sensor S1 is connected to ground at one end and to the driver 100 (with a particular impedance value associated with a human finger or palm) at another end. As such, the first sensor S1 outputs a fairly high impedance value C1(t) indicative of contact being made by a human body part of the driver 100, and the second sensor S2 outputs a fairly low impedance value C2(t) indicative of no contact being made by a human body part of the driver 100. This signifies that the driver 100 is making contact with only a finger or palm of one hand on one side (e.g., the left side or the right side) of the steering wheel 120, and not using both hands on the steering wheel 120 (and thus making contact with both the left and right sides of the vehicle). Based on the impedance value C3(t) of the third sensor S3, it can be determined if the contact is via a finger or other non-palm portion of the driver (when the impedance value C3(t) is low), or if the contact is via a hand grasp (when the impedance value C3(t) is high). Any non-grasp contact can be considered to be a non-safe vehicle driving state, whereby the non-safe vehicle driving state may result in an alert being output by a vehicle safety system, such by an audible alert (e.g., "Please put both hands on the steering wheel") or a visual alert (a display on the dashboard of the vehicle outputs a message "Please put both hands on the steering wheel"), or both.

Referring now to Figure 2, the driver 100 is grasping the steering wheel 120 with both his/her left and right hands, and the sensor elements S1, S2 and S3 are each coupled into the body and seat components 110 of the vehicle (for sensor S3, see Figure 1B). Therefore, the sensor elements S1, S2 and S3 will experience a similar impedance value C1(t), C2(t) and C3(t) compared with a situation where the steering wheel 120 is not being touched, tapped, or grasped. That is, the first, second and third sensor elements S1, S2 and S3 have a respective impedance value C1(t), C2(t) and C3(t) indicative of contact being made to the first, second and third sensor elements S1, S2 and S3 by a human body part, which in this case is indicative of a hand grasp on the steering wheel. The sensor system may compare the impedance values of the sensor elements S1, S2 and S3 to determine that the driver 100 is grasping the steering wheel 120 (instead of, for example, merely tapping the steering wheel 120), when the first, second and third sensor elements S1, S2 and S3 have an impedance value C1(t), C2(t) and C3(t) greater than a predetermined impedance value (e.g., greater than 10 picofarads).

The human body has a typical impedance in the range of from tens of picofarads to hundreds of picofarads, and this is the impedance value that can be detected from the first, second and third sensor elements S1, S2 and S3 to indicate contact with a human body part (e.g., a finger or palm of a vehicle operator). When no human contact is being made to the first, second and third sensor elements S1, S2 and S3, the impedance values C1(t), C2(t) and C3(t) output by those sensor elements S1, S2 and S3 is on the order of zero (0) farads. When the first, second and third sensors S1, S2 and S3 have a respective impedance value C1(t), C2(t) and C3(t) greater than a predetermined value and approximately equal to each other, this is indicative of a vehicle operator having both hands grasping the steering wheel, thereby indicating a safe driving condition.

In further implementations, contact made to a sensor S 1 or S2 by a finger of the driver 100 causes the sensor S1 or S2 to have an impedance value of approximately a first non-zero impedance value and the sensor S3 to have an impedance value of approximately zero (since the finger contact is only with a front surface of the steering wheel), and contact made to a sensor S1 or S2 by a palm of the driver 100 causes the sensor S1 or S2 to have an impedance value of approximately a second impedance value greater than the first impedance value and the sensor S3 to have an impedance value of approximately the second impedance value (since a normal hand grasp makes contact with both the front and back surfaces of the steering wheel), and whereby the particular mode of contact to the first and second sensors S1, S2 and S3 can be determined accordingly. For example, for an example having sensors that measure capacitance, if the first sensor S1 has a impedance value C1(t) of 15 picofarads that is indicative of a finger of a human hand being touched to the first second sensor S1, and if the second sensor S2 and the third sensor S3 each has an impedance value C2(t) of 110 picofarads that is indicative of a palm of a human hand being touched to the second sensor S2 and the third sensor S3, this can be output by a vehicle safety control unit (not shown) to determine if a warning or alert should be made to the driver 100.

The determination of appropriate values of impedances of the first, second and third sensors S1, S2 and S3 to determine finger contact, palm contact, or other type of contact, can be determined based on data stored in a database of historical data obtained from experiments made using known types of human touches to sensors and impedances measured from those known types of human touches. By way of example and not by way of limitation, for sensors that measure capacitance, impedances between 5 picofarads and 50 picofarads are indicative of a finger contact to a sensor, and impedances of between 100 picofarads and 300 picofarads are indicative of a palm or hand contact to a sensor, and whereby impedances of between 50 to 100 picofarads are in an "uncertain" range that may be indicative of one of these two types of contacts.

While the embodiments of Figures 1A, 1B and 2 show three sensor elements S1, S2 and S3, other embodiments may include additional sensor elements in the steering wheel rim to further discriminate the holding area and rate at which the holding or grasping of the steering wheel changes (e.g., by comparing signals and signal rates from contiguous sensors, as received and analyzed by a processor, not shown). Further, while the embodiments of Figures 1A, 1B and 2 show the sensor elements installed in (e.g., embedded within) the rim of the steering wheel 120, the sensor elements can be installed in (e.g., embedded within) the hub of the steering wheel 120, spokes, or any combination of steering wheel rim, hub, and spokes in order to detect additional information about how the driver is interacting with the steering wheel.

The implementation of the sensor elements of the sensor system may be based on steering wheel design (e.g., the number of spokes, dimensions, type of material, etc.), sensing requirements (e.g., if the sensor system needs to be able to detect a "hands on wheel" state), and on engineering and manufacturing requirements regarding the number, position, material, size, and shape of the sensor elements and the received sensor element signals.

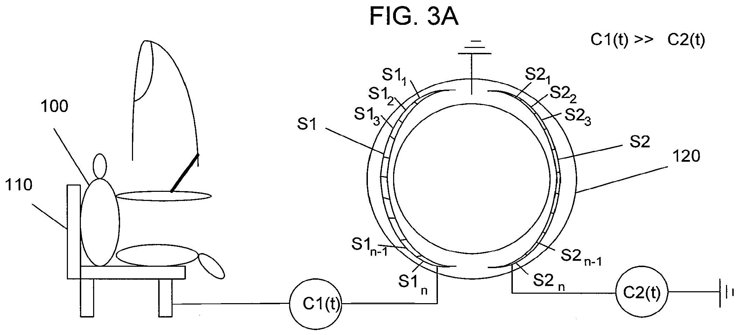

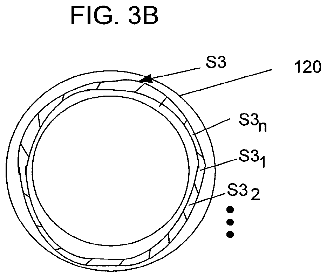

Figure 3A shows a steering wheel sensor system according to another embodiment in cross section view of the steering wheel, in which the first sensor S1 is shown as first through Nth subsensors S1₁, ..., S1ₙ, and in which the second sensor S2 is shown as first through Nth subsensors S2₁, ..., S2ₙ. Figure 3B shows the steering wheel cross section to the rear of the cross section view of Figure 3A, in which the third sensor S3 is shown as first through Nth subsensors S3ᵢ,..., S3ₙ. By having subsensors that each detects contact with a small portion of the steering wheel, e.g., a 1 inch by 1 inch area on the outer surface of the steering wheel 120, a determination can be made as to whether the driver 100 is contacting the steering wheel 120 with a palm of his/her hand, in which case more than one of the first, second or third subsensors will have an impedance value indicating human contact, or whether the driver 100 is contact the steering wheel 120 with only a finger of his/her hand, in which case only one of the first, second or third subsensors will have an impedance value indicating human contact. This information can further bolster the impedances values measured at any moment in time, to determine the type of contact being made to the steering wheel 120 by the driver 100, such as contact made by way of a finger of a hand or contact made by way of a palm of a hand.

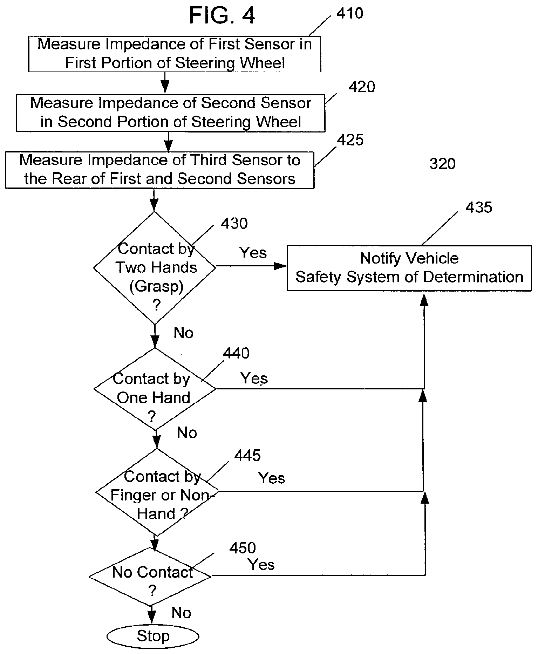

Figure 4 is a flow diagram of a method of sensing contact with a steering wheel of a vehicle, according to an embodiment. In block 410, an impedance of a first sensor disposed within a first portion of the steering wheel is measured to detect contact with a front left side surface of the steering wheel. In block 420, an impedance of a second sensor disposed within a second portion of the steering wheel separate from the first portion is measured to detect contact with a front right side surface of the steering wheel. In block 425, an impedance of a third sensor disposed within the steering wheel to the rear of the first and second sensors is measured to detect contact with a back surface of the steering wheel (the surface furthest from the vehicle operator). In block 430, a determination is made that the steering wheel is being contacted by two hands of a vehicle operator to indicate a hand grasp made by the operator to the steering wheel when the respective impedances of the first, second and third sensors are greater than or equal to a threshold impedance level, and if so, that determination is provided to vehicle safety system in block 435. If not, in block 440, a determination is made that the steering wheel is being contacted by only one hand of the vehicle operator when the impedance of the first sensor is greater than or equal to the threshold impedance level and the impedance of the second sensor is less than the threshold impedance level and the impedance of the third sensor is greater than the threshold impedance level (left side grasp of steering wheel), or when the impedance of the second sensor is greater than or equal to the threshold impedance level and the impedance of the first sensor is less than the threshold impedance level and the impedance of the third sensor is greater than the threshold impedance level (right side grasp of the steering wheel), and if so, that determination is provided to the vehicle safety system in block 435. If not, in block 445, a determination is made that the steering wheel is being contacted by a finger or other non-palm portion of the vehicle operator when the impedance of the first sensor is at a non-zero impedance level (e.g., a second threshold impedance level) that is less than or equal to the threshold impedance level and the impedance of the second sensor and the impedance of the third sensor are approximately zero (left side touch by non-hand portion of vehicle operator), or when the impedance of the second sensor is at a non-zero impedance level (e.g., the second threshold impedance level) that is less than or equal to the threshold impedance level and the impedance of the first sensor and the impedance of the third sensor are approximately zero (right side touch by non-hand portion of vehicle operator). Also, if the output of block 445 is Yes, a rate of change function may be enabled (see further description below) to determine if a tapping or swiping operation is being made by the vehicle operator to cause a change in vehicle operation state. If not, in block 450, a determination is made that the steering wheel is not being contacted by the vehicle operator when the respective impedances of the first, second and third sensors are approximately zero, and if so, that determination is provided to the vehicle safety system in block 435.

By having first, second and third sensors S1, S2 and S3 provided on a steering wheel in a manner as described above with respect to some embodiments, it can be determined whether a hand grasp is being made to the steering wheel by an operator of the vehicle, or a contact other than a hand grasp is currently being made by the operator, and also what portion of the steering wheel contact is being made to. Also, by having the first sensor S1 provided on one side (e.g., the left side) of the steering wheel to detect contact with a front left side surface of the steering wheel, by having the second sensor S2 provided on the other side (e.g., the right side) of the steering wheel to detect contact with a front right side surface of the steering wheel, and by having the third sensor S3 provided within the steering wheel to detect contact with a rear surface of the steering wheel, it can be detected as to which portion or portions of the steering wheel the operator is currently making contact with. Thus, for example, it can be determined if the operator is currently grasping the steering wheel with only his/her left palm, or with only his/her right palm, or with only his/her left finger and his right palm, or with only his/her left palm and his right finger, or with only his/her left finger and his/her right finger, or with only his/her left finger (or other non-palm body part), or with only his/her right finger (or other non-palm body part).

While not shown in the figures, the sensor system includes control circuitry or modules for using the signals from the sensor elements to determine various control states (e.g., touch, tap hold, or grasp scenarios or states) of the steering wheel. For example, the sensor system may include control circuitry including detection algorithms used to determine the control state. The sensor system may further include various signal processing modules to process the signals. For example, a left side surface tap or swipe of the steering wheel by a body part of the vehicle operator (e.g., a finger, an elbow, etc.) can be detected by measuring impedances of the first, second and third sensors (e.g., first sensor has an impedance value indicating contact, and the second and third sensors have a zero impedance value indicating no contact), and by detecting a rate of change of the impedances of the first, second and third sensors (such as to detect tapping made to by the vehicle operator on a front left side surface the steering wheel to change a vehicle operating state). Similarly, a right side surface tap or swipe of the steering wheel by a body part of the vehicle operator (e.g., a finger, an elbow, etc.) can be detected by measuring impedances of the first, second and third sensors (e.g., second sensor has an impedance value indicating contact, and the first and third sensors have a zero impedance value indicating no contact), and by detecting a rate of change of the impedances of the first, second and third sensors (such as to detect tapping made to by the vehicle operator on a front right side surface the steering wheel to change a vehicle operating state).

The present disclosure has been described with reference to example embodiments, however persons skilled in the art will recognize that changes may be made in form and detail without departing from the scope of the disclosed subject matter. For example, although different example embodiments may have been described as including one or more features providing one or more benefits, it is contemplated that the described features may be interchanged with one another or alternatively be combined with one another in the described example embodiments or in other alternative embodiments. Because the technology of the present disclosure is relatively complex, not all changes in the technology are foreseeable. The present disclosure described with reference to the exemplary embodiments is manifestly intended to be as broad as possible. For example, unless specifically otherwise noted, the exemplary embodiments reciting a single particular element also encompass a plurality of such particular elements.

It is also important to note that the construction and arrangement of the elements of the system as shown in the preferred and other exemplary embodiments is illustrative only. Although only a certain number of embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the assemblies may be reversed or otherwise varied, the length or width of the structures and/or members or connectors or other elements of the system may be varied, the nature or number of adjustment or attachment positions provided between the elements may be varied. It should be noted that the elements and/or assemblies of the system may be constructed from any of a wide variety of materials that provide sufficient strength or durability. Accordingly, all such modifications are intended to be included within the scope of the present disclosure. Other substitutions, modifications, changes and omissions may be made in the design, operating conditions and arrangement of the preferred and other exemplary embodiments without departing from the claimed subject matter. For example, the impedance sensors may be replaced with inductive sensors in another possible implementation, in which an inductive signal level may be measured to determines types of touching being made to a steering wheel. In yet another implementation, the impedance sensors may be replaced with capacitive sensors, and in yet another implementation the impedance sensors may be replaced with resistive sensors. In still another implementation, the impedance sensors may be replaced with capacitive and resistive sensors, or inductive and resistive sensors, or capacitive and inductive and resistive sensors.

## Claims

1. A method of sensing contact on a steering wheel of a vehicle, comprising:
measuring impedance of a first sensor (S1) disposed within a first portion of the steering wheel (120) to detect contact with a front left side surface of the steering wheel (120); and
measuring impedance of a second sensor (S2) disposed within a second portion of the steering wheel (120) separate from the first portion to detect contact with a front right side surface of the steering wheel (120);
measuring impedance of a third sensor (S3) disposed within a third portion of the steering wheel (120) separate from the first and second portions to detect contact with a back surface of the steering wheel (120);
determining that the steering wheel (120) is being contacted by two hands of a vehicle operator when the respective impedances of the first, second and third sensors (S1, S2, S3) are greater than or equal to a threshold impedance level; and
determining that the steering wheel (120) is being contacted by only one hand of the vehicle operator when the impedance of each of the first sensor (S1) and the third sensor (S3) is greater than or equal to the threshold impedance level and the impedance of the second sensor (S2) is less than the threshold impedance level, or when the impedance of each of the second sensor (S2) and the third sensor (S3) is greater than or equal to the threshold impedance level and the impedance of the first sensor (S1) is less than the threshold impedance level;
determining that the steering wheel (120) is being contacted by a non-hand portion of the vehicle operator when the impedance of either the first or second sensor (S1, S2) is a non-zero level less than the threshold impedance level and the impedance of the third sensor (S3) is a zero or approximately zero level; and
determining that the steering wheel (120) is not being contacted by the vehicle operator when the respective impedances of the first, second and third sensors (S1, S2, S3) is at a zero or approximately zero level.

2. The method according to claim 1,
wherein the first sensor comprises a plurality of first subsensors disposed at different locations in the first portion of the steering wheel (120), and
wherein the second sensor (S2) comprises a plurality of second subsensors disposed at different locations in the second portion of the steering wheel (120),
wherein the third sensor (S3) comprises a plurality of third subsensors disposed at different locations in a portion of the steering wheel (120) rearward of the first and second subsensors (S1, S2) with respect to a vehicle operator seat within a passenger compartment of the vehicle,
wherein the first, second and third subsensors (S1, S2, S3) are configured to provide grip detection and swipe rate.

3. The method according to claim 1, wherein the first, second and third sensors (S1, S2, S3) are configured to measure a force applied to the steering wheel (120) by the operator of the vehicle based on a signal strength of first, second and third signals output by the first, second and third sensors (S1, S2, S3) when contacted by the operator.

4. The method according to claim 1, wherein the operator of the vehicle is determined to be contacting the steering wheel (120) with a hand grasp of the operator when the first, second and third sensors (S1, S2, S3) respectively output first, second and third signals indicating contact being made to the first, second and third sensors (S1, S2, S3) at a same moment in time.

5. The method according to claim 1, wherein the operator of the vehicle is determined to be contacting the steering wheel (120) with a body part of the operator different from a hand grasp when one or both of: the first, second and third sensors (S1, S2, S3) respectively output first, second and third signals indicating contact being made to only one or two of the first, second and third sensors (S1, S2, S3) at a same moment in time; and either the first signal is greater than the second signal or when the second signal is greater than the first signal; or wherein the operator of the vehicle is determined to be contacting the steering wheel (120) with a body part of the operator different from a hand grasp to cause a control state of the vehicle to change when the first and second sensors (S1, S2) respectively output first and second signals indicating contact being made to only one of the first and second sensors (S1, S2) at a same moment in time and, optionally, wherein, when the first and second signals are approximately equal to each other at a same moment in time and when the third signal is not equal to the first and second signals at the same moment in time.

6. The method according to claim 1, wherein the first, second and third sensors (S1, S2, S3) each include heat measuring elements configured to determine a level of heat applied to the first, second and third sensors (S1, S2, S3).

7. The method according to claim 6 wherein the heat measuring elements are configured to output a signal indicating human contact being made to the first, second and third sensors (S1, S2, S3) when the level of heat is greater than a predetermined level of heat, the predetermined level of heat optionally corresponding to a normal body temperature of a human.

8. The method according to claim 1, wherein the first and second sensors (S1, S2) are electrically isolated from each other by a first electrical shield provided therebetween within the steering wheel (120), and wherein the third sensor (S3) is electrically isolated from the first and second sensors (S1, S2) by a second electrical shield provided therebetween within the steering wheel (120), or a rate of change of contact made to the first and second sensors (S1, S2) over a period of time is determined with a processor unit, to determine whether a swipe contact or a steady contact is being made to the steering wheel (120).

9. The method according to claim 1, wherein the first, second and third sensors (S1, S2, S3) are disposed in between a steering wheel cover and the steering wheel, or within an interior region of the steering wheel.

10. The method according to claim 1, wherein the first, second and third sensors (S1, S2, S3) are connected to a seat compartment within the vehicle to provide a voltage ground connection to the first, second and third sensors (S1, S2, S3).

11. A sensor system for a steering wheel (120) of a vehicle, comprising:
a first sensor (S1) disposed within a first portion of the steering wheel (120) and configured to detect contact with a front left side surface of the steering wheel (120); a second sensor (S2) disposed within a second portion of the steering wheel (120) separate from the first portion and configured to detect contact with a front right side surface of the steering wheel (120); and
a third sensor (S3) disposed within a third portion of the steering wheel (120) to detect contact with a back surface of the steering wheel (120),
wherein the first, second and third sensors (S1, S2, S3) are configured to respectively detect contact by the operator of the vehicle with the front left side, front right side, and rear surfaces;
wherein the sensor system further comprises control circuitry configured to use signals from the first, second and third sensors (S1, S2, S3) to indicate a hand grasp to the steering wheel (120) made by an operator of the vehicle versus another body part contact to the steering wheel (120) made by the operator of the vehicle; and when the first and second portions are being contacted by a hand grasp of the operator the first, second and third sensors (S1, S2, S3) output a signal of a first signal strength, and when the first and second portions are being contacted by another body part of the operator different than a hand grasp or that the first, second and third portions are not being contacted by the operator the first, second and third sensors (S1, S2, S3) output a signal of a second signal strength less than the first signal strength, and
wherein the first sensor comprises a plurality of first subsensors disposed at different locations in the first portion of the steering wheel (120), and
wherein the second sensor (S2) comprises a plurality of second subsensors disposed at different locations in the second portion of the steering wheel (120),
wherein the third sensor (S3) comprises a plurality of third subsensors disposed at different locations in a portion of the steering wheel (120) rearward of the first and second subsensors (S1, S2) with respect to a vehicle operator seat within a passenger compartment of the vehicle,
wherein the first, second and third subsensors (S1, S2, S3) are configured to provide grip detection and swipe rate.

12. A sensor system for a steering wheel (120) of a vehicle, comprising:
a first sensor (S1) disposed within a first portion of the steering wheel (120) and configured to detect contact with a front left side surface of the steering wheel (120); a second sensor (S2) disposed within a second portion of the steering wheel (120) separate from the first portion and configured to detect contact with a front right side surface of the steering wheel (120); and
a third sensor (S3) disposed within a third portion of the steering wheel (120) to detect contact with a back surface of the steering wheel (120),
wherein the first, second and third sensors (S1, S2, S3) are configured to respectively detect contact by the operator of the vehicle with the front left side, front right side, and rear surfaces;
wherein the sensor system further comprises control circuitry configured to use signals from the first, second and third sensors (S1, S2, S3) to indicate a hand grasp to the steering wheel (120) made by an operator of the vehicle versus another body part contact to the steering wheel (120) made by the operator of the vehicle; and when the first and second portions are being contacted by a hand grasp of the operator the first, second and third sensors (S1, S2, S3) output a signal of a first signal strength, and when the first and second portions are being contacted by another body part of the operator different than a hand grasp or that the first, second and third portions are not being contacted by the operator the first, second and third sensors (S1, S2, S3) output a signal of a second signal strength less than the first signal strength, and
wherein the first, second and third sensors (S1, S2, S3) are configured to measure a force applied to the steering wheel (120) by the operator of the vehicle based on a signal strength of first, second and third signals output by the first, second and third sensors (S1, S2, S3) when contacted by the operator.

13. A sensor system for a steering wheel (120) of a vehicle, comprising:
a first sensor (S1) disposed within a first portion of the steering wheel (120) and configured to detect contact with a front left side surface of the steering wheel (120); a second sensor (S2) disposed within a second portion of the steering wheel (120) separate from the first portion and configured to detect contact with a front right side surface of the steering wheel (120); and
a third sensor (S3) disposed within a third portion of the steering wheel (120) to detect contact with a back surface of the steering wheel (120),
wherein the first, second and third sensors (S1, S2, S3) are configured to respectively detect contact by the operator of the vehicle with the front left side, front right side, and rear surfaces;
wherein the sensor system further comprises control circuitry configured to use signals from the first, second and third sensors (S1, S2, S3) to indicate a hand grasp to the steering wheel (120) made by an operator of the vehicle versus another body part contact to the steering wheel (120) made by the operator of the vehicle; and when the first and second portions are being contacted by a hand grasp of the operator the first, second and third sensors (S1, S2, S3) output a signal of a first signal strength, and when the first and second portions are being contacted by another body part of the operator different than a hand grasp or that the first, second and third portions are not being contacted by the operator the first, second and third sensors (S1, S2, S3) output a signal of a second signal strength less than the first signal strength, and
wherein the operator of the vehicle is determined to be contacting the steering wheel (120) with a body part of the operator different from a hand grasp when one or both of: the first, second and third sensors (S1, S2, S3) respectively output first, second and third signals indicating contact being made to only one or two of the first, second and third sensors (S1, S2, S3) at a same moment in time; and either the first signal is greater than the second signal or when the second signal is greater than the first signal; or wherein the operator of the vehicle is determined to be contacting the steering wheel (120) with a body part of the operator different from a hand grasp to cause a control state of the vehicle to change when the first and second sensors (S1, S2) respectively output first and second signals indicating contact being made to only one of the first and second sensors (S1, S2) at a same moment in time and, optionally, wherein, when the first and second signals are approximately equal to each other at a same moment in time and when the third signal is not equal to the first and second signals at the same moment in time.

14. A sensor system for a steering wheel (120) of a vehicle, comprising:
a first sensor (S1) disposed within a first portion of the steering wheel (120) and configured to detect contact with a front left side surface of the steering wheel (120); a second sensor (S2) disposed within a second portion of the steering wheel (120) separate from the first portion and configured to detect contact with a front right side surface of the steering wheel (120); and
a third sensor (S3) disposed within a third portion of the steering wheel (120) to detect contact with a back surface of the steering wheel (120),
wherein the first, second and third sensors (S1, S2, S3) are configured to respectively detect contact by the operator of the vehicle with the front left side, front right side, and rear surfaces;
wherein the sensor system further comprises control circuitry configured to use signals from the first, second and third sensors (S1, S2, S3) to indicate a hand grasp to the steering wheel (120) made by an operator of the vehicle versus another body part contact to the steering wheel (120) made by the operator of the vehicle; and when the first and second portions are being contacted by a hand grasp of the operator the first, second and third sensors (S1, S2, S3) output a signal of a first signal strength, and when the first and second portions are being contacted by another body part of the operator different than a hand grasp or that the first, second and third portions are not being contacted by the operator the first, second and third sensors (S1, S2, S3) output a signal of a second signal strength less than the first signal strength, and
wherein the first, second and third sensors (S1, S2, S3) each include heat measuring elements configured to determine a level of heat applied to the first, second and third sensors (S1, S2, S3).

15. The sensor system according to claim 14 wherein the heat measuring elements are configured to output a signal indicating human contact being made to the first, second and third sensors (S1, S2, S3) when the level of heat is greater than a predetermined level of heat, the predetermined level of heat optionally corresponding to a normal body temperature of a human.

16. A sensor system for a steering wheel (120) of a vehicle, comprising:
a first sensor (S1) disposed within a first portion of the steering wheel (120) and configured to detect contact with a front left side surface of the steering wheel (120); a second sensor (S2) disposed within a second portion of the steering wheel (120) separate from the first portion and configured to detect contact with a front right side surface of the steering wheel (120); and
a third sensor (S3) disposed within a third portion of the steering wheel (120) to detect contact with a back surface of the steering wheel (120),
wherein the first, second and third sensors (S1, S2, S3) are configured to respectively detect contact by the operator of the vehicle with the front left side, front right side, and rear surfaces;
wherein the sensor system further comprises control circuitry configured to use signals from the first, second and third sensors (S1, S2, S3) to indicate a hand grasp to the steering wheel (120) made by an operator of the vehicle versus another body part contact to the steering wheel (120) made by the operator of the vehicle; and when the first and second portions are being contacted by a hand grasp of the operator the first, second and third sensors (S1, S2, S3) output a signal of a first signal strength, and when the first and second portions are being contacted by another body part of the operator different than a hand grasp or that the first, second and third portions are not being contacted by the operator the first, second and third sensors (S1, S2, S3) output a signal of a second signal strength less than the first signal strength, and
wherein the first and second sensors (S1, S2) are electrically isolated from each other by a first electrical shield provided therebetween within the steering wheel (120), and wherein the third sensor (S3) is electrically isolated from the first and second sensors (S1, S2) by a second electrical shield provided therebetween within the steering wheel (120), or a rate of change of contact made to the first and second sensors (S1, S2) over a period of time is determined with a processor unit, to determine whether a swipe contact or a steady contact is being made to the steering wheel (120).

17. A sensor system for a steering wheel (120) of a vehicle, comprising:
a first sensor (S1) disposed within a first portion of the steering wheel (120) and configured to detect contact with a front left side surface of the steering wheel (120); a second sensor (S2) disposed within a second portion of the steering wheel (120) separate from the first portion and configured to detect contact with a front right side surface of the steering wheel (120); and
a third sensor (S3) disposed within a third portion of the steering wheel (120) to detect contact with a back surface of the steering wheel (120),
wherein the first, second and third sensors (S1, S2, S3) are configured to respectively detect contact by the operator of the vehicle with the front left side, front right side, and rear surfaces;
wherein the sensor system further comprises control circuitry configured to use signals from the first, second and third sensors (S1, S2, S3) to indicate a hand grasp to the steering wheel (120) made by an operator of the vehicle versus another body part contact to the steering wheel (120) made by the operator of the vehicle; and when the first and second portions are being contacted by a hand grasp of the operator the first, second and third sensors (S1, S2, S3) output a signal of a first signal strength, and when the first and second portions are being contacted by another body part, namely a finger, of the operator different than a hand grasp or that the first, second and third portions are not being contacted by the operator the first, second and third sensors (S1, S2, S3) output a signal of a second signal strength less than the first signal strength,
wherein contact made to a first or second sensor (S1 or S2) by a finger of the driver (100) causes the sensor (S1 or S2) to have an impedance value of approximately a first non-zero impedance value and the third sensor (S3) to have an impedance value of approximately zero, and
wherein contact made to a first sensor (S1) or second sensor (S2) by a palm of the driver (100) causes the first or second sensor (S1 or S2) to have an impedance value of approximately a second impedance value greater than the first impedance value and the third sensor (S3) to have an impedance value of approximately the second impedance value, since a normal hand grasp makes contact with both the front and back surfaces of the steering wheel, and
whereby the particular mode of contact to the first and second sensors (S1, S2 and S3) can be determined accordingly, and
wherein the determination of appropriate values of impedances of the first, second and third sensors (S1, S2 and S3) to determine finger contact or palm contact, is determined based on data stored in a database of historical data obtained from experiments made using known types of human touches to sensors and impedances measured from those known types of human touches.

## Patentansprüche

1. Verfahren zum Erfassen eines Kontakts an einem Lenkrad eines Fahrzeugs, umfassend:
Messen der Impedanz eines ersten Sensors (S1), der innerhalb eines ersten Abschnitts des Lenkrads (120) angeordnet ist, um einen Kontakt mit einer vorderen linken Seitenoberfläche des Lenkrads (120) zu detektieren; und
Messen der Impedanz eines zweiten Sensors (S2), der innerhalb eines zweiten Abschnitts des Lenkrads (120), separat von dem ersten Abschnitt, angeordnet ist, um einen Kontakt mit einer vorderen rechten Seitenoberfläche des Lenkrads (120) zu detektieren;
Messen der Impedanz eines dritten Sensors (S3), der innerhalb eines dritten Abschnitts des Lenkrads (120), separat von dem ersten und dem zweiten Abschnitt, angeordnet ist, um einen Kontakt mit einer hinteren Oberfläche des Lenkrads (120) zu detektieren;
Bestimmen, dass das Lenkrad (120) von zwei Händen eines Fahrzeugbedieners kontaktiert wird, wenn die jeweiligen Impedanzen des ersten, des zweiten und des dritten Sensors (S1, S2, S3) größer oder gleich einem Schwellenimpedanzpegel sind; und
Bestimmen, dass das Lenkrad (120) nur von einer Hand des Fahrzeugbedieners kontaktiert wird, wenn die Impedanz sowohl des ersten Sensors (S1) als auch des dritten Sensors (S3) größer oder gleich dem Schwellenimpedanzpegel ist und die Impedanz des zweiten Sensors (S2) kleiner als der Schwellenimpedanzpegel ist, oder wenn die Impedanz sowohl des zweiten Sensors (S2) als auch des dritten Sensors (S3) größer oder gleich dem Schwellenimpedanzpegel ist und die Impedanz des ersten Sensors (S1) kleiner als der Schwellenimpedanzpegel ist; Bestimmen, dass das Lenkrad (120) von einem anderen Körperteil als der Hand des Fahrzeugbedieners kontaktiert wird, wenn die Impedanz entweder des ersten oder des zweiten Sensors (S1, S2) ein nicht-Null-Pegel ist, der kleiner ist als der Schwellenimpedanzpegel, und die Impedanz des dritten Sensors (S3) ein Null- oder näherungsweise Null-Pegel ist; und
Bestimmen, dass das Lenkrad (120) nicht von dem Fahrzeugbediener kontaktiert wird, wenn die jeweiligen Impedanzen des ersten, des zweiten und des dritten Sensors (S1, S2, S3) auf einem Null- oder näherungsweise Null-Pegel sind.

2. Verfahren nach Anspruch 1,
wobei der erste Sensor eine Vielzahl von ersten Subsensoren umfasst, die an verschiedenen Stellen in dem ersten Abschnitt des Lenkrads (120) angeordnet sind, und wobei der zweite Sensor (S2) eine Vielzahl von zweiten Subsensoren umfasst, die an verschiedenen Stellen in dem zweiten Abschnitt des Lenkrads (120) angeordnet sind,
wobei der dritte Sensor (S3) eine Vielzahl von dritten Subsensoren umfasst, die an verschiedenen Stellen in einem Abschnitt des Lenkrads (120) hinter dem ersten und dem zweiten Subsensor (S1, S2) in Bezug auf einen Fahrzeugbedienersitz innerhalb eines Fahrgastraums des Fahrzeugs angeordnet sind,
wobei der erste, der zweite und der dritte Subsensor (S1, S2, S3) dazu ausgelegt sind, eine Greifdetektion und eine Wischrate bereitzustellen.

3. Verfahren nach Anspruch 1, wobei der erste, der zweite und der dritte Sensor (S1, S2, S3) dazu ausgelegt sind, eine Kraft, die durch den Bediener des Fahrzeugs auf das Lenkrad (120) ausgeübt wird, basierend auf einer Signalstärke von ersten, zweiten und dritten Signalen zu messen, die durch den ersten, den zweiten und den dritten Sensor (S1, S2, S3) ausgegeben werden, wenn sie durch den Bediener kontaktiert werden.

4. Verfahren nach Anspruch 1, wobei bestimmt wird, dass der Bediener des Fahrzeugs das Lenkrad (120) mit einem Greifen mit der Hand des Bedieners kontaktiert, wenn der erste, der zweite und der dritte Sensor (S1, S2, S3) erste, zweite beziehungsweise dritte Signale ausgeben, die einen Kontakt mit dem ersten, dem zweiten und dem dritten Sensor (S1, S2, S3) zu einem gleichen Zeitpunkt angeben.

5. Verfahren nach Anspruch 1, wobei bestimmt wird, dass der Bediener des Fahrzeugs das Lenkrad (120) mit einem anderen Körperteil des Bedieners als einem Greifen mit der Hand kontaktiert, wenn eines oder beides gilt: der erste, der zweite und der dritte Sensor (S1, S2, S3) geben jeweils erste, zweite und dritte Signale aus, die angeben, dass nur ein oder zwei aus dem ersten, dem zweiten und dem dritten Sensor (S1, S2, S3) zu einem gleichen Zeitpunkt kontaktiert werden, und entweder das erste Signal ist größer als das zweite Signal oder das zweite Signal ist größer als das erste Signal; oder wobei bestimmt wird, dass der Bediener des Fahrzeugs das Lenkrad (120) mit einem anderen Körperteil des Bedieners als einem Greifen mit der Hand kontaktiert, um zu bewirken, dass sich ein Steuerzustand des Fahrzeugs ändert, wenn der erste und der zweite Sensor (S1, S2) jeweils ein erstes und ein zweites Signal ausgeben, die angeben, dass nur einer aus dem ersten und dem zweiten Sensor (S1, S2) zu einem gleichen Zeitpunkt kontaktiert wird, und optional wobei, wenn das erste und das zweite Signal zu einem gleichen Zeitpunkt ungefähr gleich sind und wenn das dritte Signal nicht gleich dem ersten und dem zweiten Signal zu dem gleichen Zeitpunkt ist.

6. Verfahren nach Anspruch 1, wobei der erste, der zweite und der dritte Sensor (S1, S2, S3) jeweils Wärmemesselemente beinhalten, die dazu ausgelegt sind, einen Wärmepegel zu bestimmen, der auf den ersten, den zweiten und den dritten Sensor (S1, S2, S3) angewendet wird.

7. Verfahren nach Anspruch 6, wobei die Wärmemesselemente dazu ausgelegt sind, ein Signal auszugeben, das anzeigt, dass ein menschlicher Kontakt mit dem ersten, dem zweiten und dem dritten Sensor (S1, S2, S3) hergestellt wird, wenn der Wärmepegel größer ist als ein vorbestimmter Wärmepegel, wobei der vorbestimmte Wärmepegel optional einer normalen Körpertemperatur eines Menschen entspricht.

8. Verfahren nach Anspruch 1, wobei der erste und der zweite Sensor (S1, S2) durch eine erste elektrische Abschirmung, die dazwischen innerhalb des Lenkrads (120) bereitgestellt ist, elektrisch voneinander isoliert sind und wobei der dritte Sensor (S3) durch eine zweite elektrische Abschirmung, die dazwischen innerhalb des Lenkrads (120) bereitgestellt ist, elektrisch von dem ersten und dem zweiten Sensor (S1, S2) isoliert ist, oder mit einer Prozessoreinheit wird eine über einen Zeitraum an den ersten und den zweiten Sensoren (S1, S2) vorgenommene Kontaktwechselrate ermittelt, um zu bestimmen, ob ein Wischkontakt oder ein dauerhafter Kontakt mit dem Lenkrad (120) erfolgt.

9. Verfahren nach Anspruch 1, wobei der erste, der zweite und der dritte Sensor (S1, S2, S3) zwischen einer Lenkradabdeckung und dem Lenkrad oder innerhalb eines Innenbereichs des Lenkrads angeordnet sind.

10. Verfahren nach Anspruch 1, wobei der erste, der zweite und der dritte Sensor (S1, S2, S3) mit einem Sitzfach innerhalb des Fahrzeugs verbunden sind, um eine Spannungsmasseverbindung zu dem ersten, dem zweiten und dem dritten Sensor (S1, S2, S3) bereitzustellen.

11. Sensorsystem für ein Lenkrad (120) eines Fahrzeugs, umfassend:
einen ersten Sensor (S1), der innerhalb eines ersten Abschnitts des Lenkrads (120) angeordnet ist, und dazu ausgelegt ist, einen Kontakt mit einer vorderen linken Seitenoberfläche des Lenkrads (120) zu detektieren; und
einen zweiten Sensor (S2), der innerhalb eines zweiten Abschnitts des Lenkrads (120), separat von dem ersten Abschnitt, angeordnet ist, und dazu ausgelegt ist, einen Kontakt mit einer vorderen rechten Seitenoberfläche des Lenkrads (120) zu detektieren; und
einen dritten Sensor (S3), der innerhalb eines dritten Abschnitts des Lenkrads (120) angeordnet ist, um einen Kontakt mit einer hinteren Oberfläche des Lenkrads (120) zu detektieren,
wobei der erste, der zweite und der dritte Sensor (S1, S2, S3) dazu ausgelegt sind, jeweils einen Kontakt durch den Bediener des Fahrzeugs mit der vorderen linken seitlichen, der vorderen rechten seitlichen und der hinteren Oberfläche zu detektieren;
wobei das Sensorsystem ferner eine Steuerschaltungsanordnung umfasst, die dazu ausgelegt ist, Signale von dem ersten, dem zweiten und dem dritten Sensor (S1, S2, S3) zu verwenden, um ein von einem Bediener des Fahrzeugs durchgeführten Greifen mit der Hand am Lenkrad (120) gegenüber einem Kontakt mit einem anderen Körperteil des Bedieners des Fahrzeugs am Lenkrad (120) anzuzeigen; und wenn der erste und der zweite Abschnitt durch ein Greifen mit der Hand des Bedieners kontaktiert werden, der erste, der zweite und der dritte Sensor (S1, S2, S3) ein Signal einer ersten Signalstärke ausgeben, und wenn der erste und der zweite Abschnitt durch einen anderen Körperteil des Bedieners als einem Greifen mit der Hand kontaktiert werden, oder wenn der erste, der zweite und der dritte Abschnitt nicht durch den Bediener kontaktiert werden, der erste, der zweite und der dritte Sensor (S1, S2, S3) ein Signal einer zweiten Signalstärke ausgeben, die kleiner ist als die erste Signalstärke, und
wobei der erste Sensor eine Vielzahl von ersten Subsensoren umfasst, die an verschiedenen Stellen in dem ersten Abschnitt des Lenkrads (120) angeordnet sind, und
wobei der zweite Sensor (S2) eine Vielzahl von zweiten Subsensoren umfasst, die an verschiedenen Stellen in dem zweiten Abschnitt des Lenkrads (120) angeordnet sind,
wobei der dritte Sensor (S3) eine Vielzahl von dritten Subsensoren umfasst, die an verschiedenen Stellen in einem Abschnitt des Lenkrads (120) hinter dem ersten und dem zweiten Subsensor (S1, S2) in Bezug auf einen Fahrzeugbedienersitz innerhalb eines Fahrgastraums des Fahrzeugs angeordnet sind,
wobei der erste, der zweite und der dritte Subsensor (S1, S2, S3) dazu ausgelegt sind, eine Greifdetektion und eine Wischrate bereitzustellen.

12. Sensorsystem für ein Lenkrad (120) eines Fahrzeugs, umfassend:
einen ersten Sensor (S1), der innerhalb eines ersten Abschnitts des Lenkrads (120) angeordnet ist, und dazu ausgelegt ist, einen Kontakt mit einer vorderen linken Seitenoberfläche des Lenkrads (120) zu detektieren; und
einen zweiten Sensor (S2), der innerhalb eines zweiten Abschnitts des Lenkrads (120), separat von dem ersten Abschnitt, angeordnet ist, und dazu ausgelegt ist, einen Kontakt mit einer vorderen rechten Seitenoberfläche des Lenkrads (120) zu detektieren; und
einen dritten Sensor (S3), der innerhalb eines dritten Abschnitts des Lenkrads (120) angeordnet ist, um einen Kontakt mit einer hinteren Oberfläche des Lenkrads (120) zu detektieren,
wobei der erste, der zweite und der dritte Sensor (S1, S2, S3) dazu ausgelegt sind, jeweils einen Kontakt durch den Bediener des Fahrzeugs mit der vorderen linken seitlichen, der vorderen rechten seitlichen und der hinteren Oberfläche zu detektieren;
wobei das Sensorsystem ferner eine Steuerschaltungsanordnung umfasst, die dazu ausgelegt ist, Signale von dem ersten, dem zweiten und dem dritten Sensor (S1, S2, S3) zu verwenden, um ein von einem Bediener des Fahrzeugs durchgeführten Greifen mit der Hand am Lenkrad (120) gegenüber einem Kontakt mit einem anderen Körperteil des Bedieners des Fahrzeugs am Lenkrad (120) anzuzeigen; und wenn der erste und der zweite Abschnitt durch ein Greifen mit der Hand des Bedieners kontaktiert werden, der erste, der zweite und der dritte Sensor (S1, S2, S3) ein Signal einer ersten Signalstärke ausgeben, und wenn der erste und der zweite Abschnitt durch einen anderen Körperteil des Bedieners als einem Greifen mit der Hand kontaktiert werden, oder wenn der erste, der zweite und der dritte Abschnitt nicht durch den Bediener kontaktiert werden, der erste, der zweite und der dritte Sensor (S1, S2, S3) ein Signal einer zweiten Signalstärke ausgeben, die kleiner ist als die erste Signalstärke, und
wobei der erste, der zweite und der dritte Sensor (S1, S2, S3) dazu ausgelegt sind, eine Kraft, die durch den Bediener des Fahrzeugs auf das Lenkrad (120) ausgeübt wird, basierend auf einer Signalstärke von ersten, zweiten und dritten Signalen zu messen, die durch den ersten, den zweiten und den dritten Sensor (S1, S2, S3) ausgegeben werden, wenn sie durch den Bediener kontaktiert werden.

13. Sensorsystem für ein Lenkrad (120) eines Fahrzeugs, umfassend:
einen ersten Sensor (S1), der innerhalb eines ersten Abschnitts des Lenkrads (120) angeordnet ist, und dazu ausgelegt ist, einen Kontakt mit einer vorderen linken Seitenoberfläche des Lenkrads (120) zu detektieren; und
einen zweiten Sensor (S2), der innerhalb eines zweiten Abschnitts des Lenkrads (120), separat von dem ersten Abschnitt, angeordnet ist, und dazu ausgelegt ist, einen Kontakt mit einer vorderen rechten Seitenoberfläche des Lenkrads (120) zu detektieren; und
einen dritten Sensor (S3), der innerhalb eines dritten Abschnitts des Lenkrads (120) angeordnet ist, um einen Kontakt mit einer hinteren Oberfläche des Lenkrads (120) zu detektieren,
wobei der erste, der zweite und der dritte Sensor (S1, S2, S3) dazu ausgelegt sind, jeweils einen Kontakt durch den Bediener des Fahrzeugs mit der vorderen linken seitlichen, der vorderen rechten seitlichen und der hinteren Oberfläche zu detektieren;
wobei das Sensorsystem ferner eine Steuerschaltungsanordnung umfasst, die dazu ausgelegt ist, Signale von dem ersten, dem zweiten und dem dritten Sensor (S1, S2, S3) zu verwenden, um ein von einem Bediener des Fahrzeugs durchgeführten Greifen mit der Hand am Lenkrad (120) gegenüber einem Kontakt mit einem anderen Körperteil des Bedieners des Fahrzeugs am Lenkrad (120) anzuzeigen; und wenn der erste und der zweite Abschnitt durch ein Greifen mit der Hand des Bedieners kontaktiert werden, der erste, der zweite und der dritte Sensor (S1, S2, S3) ein Signal einer ersten Signalstärke ausgeben, und wenn der erste und der zweite Abschnitt durch einen anderen Körperteil des Bedieners als einem Greifen mit der Hand kontaktiert werden, oder wenn der erste, der zweite und der dritte Abschnitt nicht durch den Bediener kontaktiert werden, der erste, der zweite und der dritte Sensor (S1, S2, S3) ein Signal einer zweiten Signalstärke ausgeben, die kleiner ist als die erste Signalstärke, und
wobei bestimmt wird, dass der Bediener des Fahrzeugs das Lenkrad (120) mit einem anderen Körperteil des Bedieners als einem Greifen mit der Hand kontaktiert, wenn eines oder beides gilt: der erste, der zweite und der dritte Sensor (S1, S2, S3) geben jeweils erste, zweite und dritte Signale aus, die angeben, dass nur ein oder zwei aus dem ersten, dem zweiten und dem dritten Sensor (S1, S2, S3) zu einem gleichen Zeitpunkt kontaktiert werden, und entweder das erste Signal größer als das zweite Signal ist oder das zweite Signal größer als das erste Signal ist; oder wobei bestimmt wird, dass der Bediener des Fahrzeugs das Lenkrad (120) mit einem anderen Körperteil des Bedieners als einem Greifen mit der Hand kontaktiert, um zu bewirken, dass sich ein Steuerzustand des Fahrzeugs ändert, wenn der erste und der zweite Sensor (S1, S2) jeweils ein erstes und ein zweites Signal ausgeben, die angeben, dass nur einer aus dem ersten und dem zweiten Sensor (S1, S2) zu einem gleichen Zeitpunkt kontaktiert wird, und optional wobei, wenn das erste und das zweite Signal zu einem gleichen Zeitpunkt ungefähr gleich sind und wenn das dritte Signal nicht gleich dem ersten und dem zweiten Signal zu dem gleichen Zeitpunkt ist.

14. Sensorsystem für ein Lenkrad (120) eines Fahrzeugs, umfassend:
einen ersten Sensor (S1), der innerhalb eines ersten Abschnitts des Lenkrads (120) angeordnet ist, und dazu ausgelegt ist, einen Kontakt mit einer vorderen linken Seitenoberfläche des Lenkrads (120) zu detektieren; und einen zweiten Sensor (S2), der innerhalb eines zweiten Abschnitts des Lenkrads (120), separat von dem ersten Abschnitt, angeordnet ist, und dazu ausgelegt ist, einen Kontakt mit einer vorderen rechten Seitenoberfläche des Lenkrads (120) zu detektieren; und
einen dritten Sensor (S3), der innerhalb eines dritten Abschnitts des Lenkrads (120) angeordnet ist, um einen Kontakt mit einer hinteren Oberfläche des Lenkrads (120) zu detektieren,
wobei der erste, der zweite und der dritte Sensor (S1, S2, S3) dazu ausgelegt sind, jeweils einen Kontakt durch den Bediener des Fahrzeugs mit der vorderen linken seitlichen, der vorderen rechten seitlichen und der hinteren Oberfläche zu detektieren;
wobei das Sensorsystem ferner eine Steuerschaltungsanordnung umfasst, die dazu ausgelegt ist, Signale von dem ersten, dem zweiten und dem dritten Sensor (S1, S2, S3) zu verwenden, um ein von einem Bediener des Fahrzeugs durchgeführten Greifen mit der Hand am Lenkrad (120) gegenüber einem Kontakt mit einem anderen Körperteil des Bedieners des Fahrzeugs am Lenkrad (120) anzuzeigen; und wenn der erste und der zweite Abschnitt durch ein Greifen mit der Hand des Bedieners kontaktiert werden, der erste, der zweite und der dritte Sensor (S1, S2, S3) ein Signal einer ersten Signalstärke ausgeben, und wenn der erste und der zweite Abschnitt durch einen anderen Körperteil des Bedieners als einem Greifen mit der Hand kontaktiert werden, oder wenn der erste, der zweite und der dritte Abschnitt nicht durch den Bediener kontaktiert werden, der erste, der zweite und der dritte Sensor (S1, S2, S3) ein Signal einer zweiten Signalstärke ausgeben, die kleiner ist als die erste Signalstärke, und
wobei der erste, der zweite und der dritte Sensor (S1, S2, S3) jeweils Wärmemesselemente beinhalten, die dazu ausgelegt sind, einen Wärmepegel zu bestimmen, der auf den ersten, den zweiten und den dritten Sensor (S1, S2, S3) angewendet wird.

15. Sensorsystem nach Anspruch 14, wobei die Wärmemesselemente dazu ausgelegt sind, ein Signal auszugeben, das anzeigt, dass ein menschlicher Kontakt mit dem ersten, dem zweiten und dem dritten Sensor (S1, S2, S3) hergestellt wird, wenn der Wärmepegel größer ist als ein vorbestimmter Wärmepegel, wobei der vorbestimmte Wärmepegel optional einer normalen Körpertemperatur eines Menschen entspricht.

16. Sensorsystem für ein Lenkrad (120) eines Fahrzeugs, umfassend:
einen ersten Sensor (S1), der innerhalb eines ersten Abschnitts des Lenkrads (120) angeordnet ist, und dazu ausgelegt ist, einen Kontakt mit einer vorderen linken Seitenoberfläche des Lenkrads (120) zu detektieren; und
einen zweiten Sensor (S2), der innerhalb eines zweiten Abschnitts des Lenkrads (120), separat von dem ersten Abschnitt, angeordnet ist, und dazu ausgelegt ist, einen Kontakt mit einer vorderen rechten Seitenoberfläche des Lenkrads (120) zu detektieren; und
einen dritten Sensor (S3), der innerhalb eines dritten Abschnitts des Lenkrads (120) angeordnet ist, um einen Kontakt mit einer hinteren Oberfläche des Lenkrads (120) zu detektieren,
wobei der erste, der zweite und der dritte Sensor (S1, S2, S3) dazu ausgelegt sind, jeweils einen Kontakt durch den Bediener des Fahrzeugs mit der vorderen linken seitlichen, der vorderen rechten seitlichen und der hinteren Oberfläche zu detektieren;
wobei das Sensorsystem ferner eine Steuerschaltungsanordnung umfasst, die dazu ausgelegt ist, Signale von dem ersten, dem zweiten und dem dritten Sensor (S1, S2, S3) zu verwenden, um ein von einem Bediener des Fahrzeugs durchgeführten Greifen mit der Hand am Lenkrad (120) gegenüber einem Kontakt mit einem anderen Körperteil des Bedieners des Fahrzeugs am Lenkrad (120) anzuzeigen; und wenn der erste und der zweite Abschnitt durch ein Greifen mit der Hand des Bedieners kontaktiert werden, der erste, der zweite und der dritte Sensor (S1, S2, S3) ein Signal einer ersten Signalstärke ausgeben, und wenn der erste und der zweite Abschnitt durch einen anderen Körperteil des Bedieners als einem Greifen mit der Hand kontaktiert werden, oder wenn der erste, der zweite und der dritte Abschnitt nicht durch den Bediener kontaktiert werden, der erste, der zweite und der dritte Sensor (S1, S2, S3) ein Signal einer zweiten Signalstärke ausgeben, die kleiner ist als die erste Signalstärke, und
wobei der erste und der zweite Sensor (S1, S2) durch eine erste elektrische Abschirmung, die dazwischen innerhalb des Lenkrads (120) bereitgestellt ist, elektrisch voneinander isoliert sind und wobei der dritte Sensor (S3) durch eine zweite elektrische Abschirmung, die dazwischen innerhalb des Lenkrads (120) bereitgestellt ist, elektrisch von dem ersten und dem zweiten Sensor (S1, S2) isoliert ist, oder mit einer Prozessoreinheit wird eine über einen Zeitraum an den ersten und den zweiten Sensoren (S1, S2) vorgenommene Kontaktwechselrate ermittelt, um zu bestimmen, ob ein Wischkontakt oder ein dauerhafter Kontakt mit dem Lenkrad (120) erfolgt.

17. Sensorsystem für ein Lenkrad (120) eines Fahrzeugs, umfassend:
einen ersten Sensor (S1), der innerhalb eines ersten Abschnitts des Lenkrads (120) angeordnet ist, und dazu ausgelegt ist, einen Kontakt mit einer vorderen linken Seitenoberfläche des Lenkrads (120) zu detektieren; und
einen zweiten Sensor (S2), der innerhalb eines zweiten Abschnitts des Lenkrads (120), separat von dem ersten Abschnitt, angeordnet ist, und dazu ausgelegt ist, einen Kontakt mit einer vorderen rechten Seitenoberfläche des Lenkrads (120) zu detektieren; und
einen dritten Sensor (S3), der innerhalb eines dritten Abschnitts des Lenkrads (120) angeordnet ist, um einen Kontakt mit einer hinteren Oberfläche des Lenkrads (120) zu detektieren,
wobei der erste, der zweite und der dritte Sensor (S1, S2, S3) dazu ausgelegt sind, jeweils einen Kontakt durch den Bediener des Fahrzeugs mit der vorderen linken seitlichen, der vorderen rechten seitlichen und der hinteren Oberfläche zu detektieren;
wobei das Sensorsystem ferner eine Steuerschaltungsanordnung umfasst, die dazu ausgelegt ist, Signale von dem ersten, dem zweiten und dem dritten Sensor (S1, S2, S3) zu verwenden, um ein von einem Bediener des Fahrzeugs durchgeführten Greifen mit der Hand am Lenkrad (120) gegenüber einem Kontakt mit einem anderen Körperteil des Bedieners des Fahrzeugs am Lenkrad (120) anzuzeigen; und wenn der erste und der zweite Abschnitt durch ein Greifen mit der Hand des Bedieners kontaktiert werden, der erste, der zweite und der dritte Sensor (S1, S2, S3) ein Signal einer ersten Signalstärke ausgeben, und wenn der erste und der zweite Abschnitt durch einen anderen Körperteil des Bedieners als einem Greifen mit der Hand, nämlich einem Finger, kontaktiert werden, oder wenn der erste, der zweite und der dritte Abschnitt nicht durch den Bediener kontaktiert werden, der erste, der zweite und der dritte Sensor (S1, S2, S3) ein Signal einer zweiten Signalstärke ausgeben, die kleiner ist als die erste Signalstärke,
wobei ein Kontakt, der durch einen Finger des Fahrers (100) an einen ersten oder zweiten Sensor (S1 oder S2) gemacht wird, bewirkt, dass der Sensor (S1 oder S2) einen Impedanzwert von näherungsweise einem ersten Impedanzwert ungleich Null aufweist und der dritte Sensor (S3) einen Impedanzwert von näherungsweise Null aufweist, und
wobei ein Kontakt, der durch eine Handfläche des Fahrers (100) an einem ersten Sensor (S1) oder zweiten Sensor (S2) hergestellt wird, bewirkt, dass der erste oder der zweite Sensor (S1 oder S2) einen Impedanzwert von näherungsweise einem zweiten Impedanzwert aufweist, der größer ist als der erste Impedanzwert, und der dritte Sensor (S3) einen Impedanzwert von näherungsweise dem zweiten Impedanzwert aufweist, da ein normales Greifen mit der Hand einen Kontakt sowohl mit der vorderen als auch der hinteren Oberfläche des Lenkrads herstellt, und
wobei die jeweilige Kontaktart mit dem ersten und dem zweiten Sensor (S1, S2 und S3) entsprechend bestimmt werden kann, und
wobei das Bestimmen geeigneter Werte von Impedanzen des ersten, des zweiten und des dritten Sensors (S1, S2 und S3) zum Bestimmen von Fingerkontakt oder Handflächenkontakt basierend auf Daten bestimmt wird, die in einer Datenbank historischer Daten gespeichert sind, die aus Experimenten erhalten werden, die unter Verwendung bekannter Arten von menschlichen Berührungen an Sensoren durchgeführt werden, und Impedanzen, die von diesen bekannten Arten von menschlichen Berührungen gemessen werden.

## Revendications

1. Procédé de détection de contact sur un volant d'un véhicule, comprenant :
la mesure de l'impédance d'un premier capteur (S1) disposé à l'intérieur d'une première partie du volant (120) pour détecter le contact avec une surface latérale avant gauche du volant (120) ; et
la mesure de l'impédance d'un deuxième capteur (S2) disposé à l'intérieur d'une deuxième partie du volant (120) séparée de la première partie pour détecter le contact avec une surface latérale avant droite du volant (120) ;
la mesure de l'impédance d'un troisième capteur (S3) disposé à l'intérieur d'une troisième partie du volant (120) séparée des première et deuxième parties pour détecter un contact avec une surface arrière du volant (120) ;
la détermination que le volant (120) est en contact par deux mains d'un opérateur de véhicule lorsque les impédances respectives des premier, deuxième et troisième capteurs (S1, S2, S3) sont supérieures ou égales à un niveau d'impédance seuil ; et
la détermination que le volant (120) est en contact par une seule main de l'opérateur du véhicule lorsque l'impédance de chacun du premier capteur (S1) et du troisième capteur (S3) est supérieure ou égale au niveau d'impédance seuil et que l'impédance du deuxième capteur (S2) est inférieure au niveau d'impédance seuil, ou lorsque l'impédance de chacun du deuxième capteur (S2) et du troisième capteur (S3) est supérieure ou égale au niveau d'impédance seuil et l'impédance du premier capteur (S1) est inférieure au niveau d'impédance seuil ;
la détermination que le volant (120) est en contact avec une partie non manuelle de l'opérateur du véhicule lorsque l'impédance du premier ou du deuxième capteur (S1, S2) est à un niveau non nul inférieur au niveau d'impédance seuil et que l'impédance du troisième capteur (S3) est à un niveau nul ou approximativement nul ; et
la détermination que le volant (120) n'est pas en contact avec l'opérateur du véhicule lorsque les impédances respectives des premier, deuxième et troisième capteurs (S1, S2, S3) sont à un niveau nul ou approximativement nul.

2. Procédé selon la revendication 1,
le premier capteur comprenant une pluralité de premiers sous-capteurs disposés à différents emplacements dans la première partie du volant (120), et
le deuxième capteur (S2) comprenant une pluralité de deuxièmes sous-capteurs disposés à des emplacements différents dans la deuxième partie du volant (120),
le troisième capteur (S3) comprenant une pluralité de troisièmes sous-capteurs disposés à différents emplacements dans une partie du volant (120) en arrière par rapport aux premiers et deuxièmes sous-capteurs (S1, S2) par rapport à un siège d'opérateur du véhicule à l'intérieur d'un habitacle du véhicule,
les premiers, deuxièmes et troisièmes sous-capteurs (S1, S2, S3) étant configurés pour fournir une détection d'adhérence et un taux de glissement.

3. Procédé selon la revendication 1, les premier, deuxième et troisième capteurs (S1, S2, S3) étant configurés pour mesurer une force appliquée au volant (120) par l'opérateur du véhicule sur la base d'une intensité de signal de premier, deuxième et troisième signaux émis par les premier, deuxième et troisième capteurs (S1, S2, S3) lorsqu'ils sont contactés par l'opérateur.

4. Procédé selon la revendication 1, l'opérateur du véhicule étant déterminé comme étant en contact avec le volant (120) avec une prise manuelle de l'opérateur lorsque les premier, deuxième et troisième capteurs (S1, S2, S3) émettent respectivement des premier, deuxième et troisième signaux indiquant que le contact est effectué avec les premier, deuxième et troisième capteurs (S1, S2, S3) au même moment dans le temps.

5. Procédé selon la revendication 1, l'opérateur du véhicule étant déterminé comme étant en contact avec le volant (120) avec une partie du corps de l'opérateur différente d'une prise manuelle lors de l'une ou des deux situations suivantes : les premier, deuxième et troisième capteurs (S1, S2, S3) émettent respectivement des premier, deuxième et troisième signaux indiquant qu'un contact est effectué avec seulement un ou deux des premier, deuxième et troisième capteurs (S1, S2, S3) au même moment dans le temps ; et soit le premier signal est supérieur au deuxième signal, soit lorsque le deuxième signal est supérieur au premier signal, soit lorsque l'opérateur du véhicule est déterminé comme étant en contact avec le volant (120) avec une partie du corps de l'opérateur différente d'une prise manuelle pour provoquer un changement d'état de commande du véhicule lorsque les premier et deuxième capteurs (S1, S2) émettent respectivement des premier et deuxième signaux indiquant qu'un contact est établi avec un seul des premier et deuxième capteurs (S1, S2) à un même moment dans le temps et, facultativement, lorsque les premier et deuxième signaux sont approximativement égaux l'un à l'autre à un même moment dans le temps et lorsque le troisième signal n'est pas égal aux premier et deuxième signaux au même moment dans le temps.

6. Procédé selon la revendication 1, les premier, deuxième et troisième capteurs (S1, S2, S3) comprenant chacun des éléments de mesure de chaleur configurés pour déterminer un niveau de chaleur appliqué aux premier, deuxième et troisième capteurs (S1, S2, S3).

7. Procédé selon la revendication 6, les éléments de mesure de chaleur étant configurés pour émettre un signal indiquant un contact humain effectué vers les premier, deuxième et troisième capteurs (S1, S2, S3) lorsque le niveau de chaleur est supérieur à un niveau prédéterminé de chaleur, le niveau prédéterminé de chaleur correspondant facultativement à une température corporelle normale d'un être humain.

8. Procédé selon la revendication 1, les premier et deuxième capteurs (S1, S2) étant isolés électriquement l'un de l'autre par une première protection électrique prévue entre eux à l'intérieur du volant (120), et le troisième capteur (S3) étant isolé électriquement des premier et deuxième capteurs (S1, S2) par une deuxième protection électrique prévue entre eux à l'intérieur du volant (120), ou une vitesse de variation du contact effectué avec les premier et deuxième capteurs (S1, S2) sur une période de temps étant déterminée avec une unité de traitement, afin de déterminer si un contact glissant ou un contact stable est effectué avec le volant (120).

9. Procédé selon la revendication 1, les premier, deuxième et troisième capteurs (S1, S2, S3) étant disposés entre un couvercle de volant et le volant, ou à l'intérieur d'une région intérieure du volant.

10. Procédé selon la revendication 1, les premier, deuxième et troisième capteurs (S1, S2, S3) étant connectés à un compartiment de siège à l'intérieur du véhicule pour fournir une connexion de masse de tension aux premier, deuxième et troisième capteurs (S1, S2, S3).

11. Système de capteur pour un volant (120) d'un véhicule, comprenant :
un premier capteur (S1) disposé à l'intérieur d'une première partie du volant (120) et configuré pour détecter un contact avec une surface latérale avant gauche du volant (120) ;
un deuxième capteur (S2) disposé à l'intérieur d'une deuxième partie du volant (120) séparée de la première partie et configuré pour détecter le contact avec une surface latérale avant droite du volant (120) ; et
un troisième capteur (S3) disposé à l'intérieur d'une troisième partie du volant (120) pour détecter un contact avec une surface arrière du volant (120),
les premier, deuxième et troisième capteurs (S1, S2, S3) étant configurés pour détecter respectivement un contact de l'opérateur du véhicule avec les surfaces latérale avant gauche, avant droite et arrière ;
le système de capteur comprenant en outre des circuits de commande configurés pour utiliser des signaux provenant des premier, deuxième et troisième capteurs (S1, S2, S3) pour indiquer une prise manuelle du volant (120) effectuée par un opérateur du véhicule versus un autre contact d'une partie de corps avec le volant (120) effectué par l'opérateur du véhicule ; et
lorsque les première et deuxième parties sont contactées par une prise manuelle de l'opérateur, les premier,
deuxième et troisième capteurs (S1, S2, S3) émettent un signal d'une première intensité de signal, et lorsque les première et deuxième parties sont en contact avec une autre partie du corps de l'opérateur différente d'une prise manuelle ou que les première, deuxième et troisième parties ne sont pas en contact avec l'opérateur, les premier, deuxième et troisième capteurs (S1, S2, S3) émettent un signal d'une deuxième intensité de signal inférieure à la première intensité de signal, et
le premier capteur comprenant une pluralité de premiers sous-capteurs disposés à différents emplacements dans la première partie du volant (120), et
le deuxième capteur (S2) comprenant une pluralité de deuxièmes sous-capteurs disposés à des emplacements différents dans la deuxième partie du volant (120),
le troisième capteur (S3) comprenant une pluralité de troisièmes sous-capteurs disposés à différents emplacements dans une partie du volant (120) en arrière par rapport aux premiers et deuxièmes sous-capteurs (S1, S2) par rapport à un siège d'opérateur du véhicule à l'intérieur d'un habitacle du véhicule,
les premiers, deuxièmes et troisièmes sous-capteurs (S1, S2, S3) étant configurés pour fournir une détection d'adhérence et un taux de glissement.

12. Système de capteur pour un volant (120) d'un véhicule, comprenant :
un premier capteur (S1) disposé à l'intérieur d'une première partie du volant (120) et configuré pour détecter un contact avec une surface latérale avant gauche du volant (120) ;
un deuxième capteur (S2) disposé à l'intérieur d'une deuxième partie du volant (120) séparée de la première partie et configuré pour détecter le contact avec une surface latérale avant droite du volant (120) ; et
un troisième capteur (S3) disposé à l'intérieur d'une troisième partie du volant (120) pour détecter un contact avec une surface arrière du volant (120),
les premier, deuxième et troisième capteurs (S1, S2, S3) étant configurés pour détecter respectivement un contact de l'opérateur du véhicule avec les surfaces latérale avant gauche, avant droite et arrière ;
le système de capteur comprenant en outre des circuits de commande configurés pour utiliser des signaux provenant des premier, deuxième et troisième capteurs (S1, S2, S3) pour indiquer une prise manuelle du volant (120) effectuée par un opérateur du véhicule versus un autre contact d'une partie de corps avec le volant (120) effectué par l'opérateur du véhicule ; et
lorsque les première et deuxième parties sont contactées par une prise manuelle de l'opérateur, les premier, deuxième et troisième capteurs (S1, S2, S3) émettent un signal d'une première intensité de signal, et lorsque les première et deuxième parties sont en contact avec une autre partie du corps de l'opérateur différente d'une prise manuelle ou que les première, deuxième et troisième parties ne sont pas en contact avec l'opérateur, les premier, deuxième et troisième capteurs (S1, S2, S3) émettent un signal d'une deuxième intensité de signal inférieure à la première intensité de signal, et
les premier, deuxième et troisième capteurs (S1, S2, S3) étant configurés pour mesurer une force appliquée au volant (120) par l'opérateur du véhicule sur la base d'une intensité de signal de premier, deuxième et troisième signaux émis par les premier, deuxième et troisième capteurs (S1, S2, S3) lorsqu'ils sont contactés par l'opérateur.

13. Système de capteur pour un volant (120) d'un véhicule, comprenant :
un premier capteur (S1) disposé à l'intérieur d'une première partie du volant (120) et configuré pour détecter un contact avec une surface latérale avant gauche du volant (120) ;
un deuxième capteur (S2) disposé à l'intérieur d'une deuxième partie du volant (120) séparée de la première partie et configuré pour détecter le contact avec une surface latérale avant droite du volant (120) ; et
un troisième capteur (S3) disposé à l'intérieur d'une troisième partie du volant (120) pour détecter un contact avec une surface arrière du volant (120),
les premier, deuxième et troisième capteurs (S1, S2, S3) étant configurés pour détecter respectivement un contact de l'opérateur du véhicule avec les surfaces latérale avant gauche, avant droite et arrière ;
le système de capteur comprenant en outre des circuits de commande configurés pour utiliser des signaux provenant des premier, deuxième et troisième capteurs (S1, S2, S3) pour indiquer une prise manuelle du volant (120) effectuée par un opérateur du véhicule versus un autre contact d'une partie de corps avec le volant (120) effectué par l'opérateur du véhicule ; et lorsque les première et deuxième parties sont contactées par une prise manuelle de l'opérateur, les premier, deuxième et troisième capteurs (S1, S2, S3) émettent un signal d'une première intensité de signal, et lorsque les première et deuxième parties sont en contact avec une autre partie du corps de l'opérateur différente d'une prise manuelle ou que les première, deuxième et troisième parties ne sont pas en contact avec l'opérateur, les premier, deuxième et troisième capteurs (S1, S2, S3) émettent un signal d'une deuxième intensité de signal inférieure à la première intensité de signal, et
dans lequel il est déterminé que l'opérateur du véhicule est en contact avec le volant (120) avec une partie du corps de l'opérateur différente d'une prise manuelle lors de l'une ou des deux situations suivantes : les premier, deuxième et troisième capteurs (S1, S2, S3) émettent respectivement des premier, deuxième et troisième signaux indiquant qu'un contact est effectué avec seulement un ou deux des premier, deuxième et troisième capteurs (S1, S2, S3) au même moment dans le temps ; et soit le premier signal est supérieur au deuxième signal, soit lorsque le deuxième signal est supérieur au premier signal, soit lorsque l'opérateur du véhicule est déterminé comme étant en contact avec le volant (120) avec une partie du corps de l'opérateur différente d'une prise manuelle pour provoquer un changement d'état de commande du véhicule lorsque les premier et deuxième capteurs (S1, S2) émettent respectivement des premier et deuxième signaux indiquant qu'un contact est établi avec un seul des premier et deuxième capteurs (S1, S2) à un même moment dans le temps et, facultativement, lorsque les premier et deuxième signaux sont approximativement égaux l'un à l'autre à un même moment dans le temps et lorsque le troisième signal n'est pas égal aux premier et deuxième signaux au même moment dans le temps.

14. Système de capteur pour un volant (120) d'un véhicule, comprenant :
un premier capteur (S1) disposé à l'intérieur d'une première partie du volant (120) et configuré pour détecter un contact avec une surface latérale avant gauche du volant (120) ;
un deuxième capteur (S2) disposé à l'intérieur d'une deuxième partie du volant (120) séparée de la première partie et configuré pour détecter le contact avec une surface latérale avant droite du volant (120) ; et
un troisième capteur (S3) disposé à l'intérieur d'une troisième partie du volant (120) pour détecter un contact avec une surface arrière du volant (120),
les premier, deuxième et troisième capteurs (S1, S2, S3) étant configurés pour détecter respectivement un contact de l'opérateur du véhicule avec les surfaces latérale avant gauche, avant droite et arrière ;
le système de capteur comprenant en outre des circuits de commande configurés pour utiliser des signaux provenant des premier, deuxième et troisième capteurs (S1, S2, S3) pour indiquer une prise manuelle du volant (120) effectuée par un opérateur du véhicule versus un autre contact d'une partie de corps avec le volant (120) effectué par l'opérateur du véhicule ; et
lorsque les première et deuxième parties sont contactées par une prise manuelle de l'opérateur, les premier, deuxième et troisième capteurs (S1, S2, S3) émettent un signal d'une première intensité de signal, et lorsque les première et deuxième parties sont en contact avec une autre partie du corps de l'opérateur différente d'une prise manuelle ou que les première, deuxième et troisième parties ne sont pas en contact avec l'opérateur, les premier, deuxième et troisième capteurs (S1, S2, S3) émettent un signal d'une deuxième intensité de signal inférieure à la première intensité de signal, et
les premier, deuxième et troisième capteurs (S1, S2, S3) comprenant chacun des éléments de mesure de la chaleur configurés pour déterminer un niveau de chaleur appliquée aux premier, deuxième et troisième capteurs (S1, S2, S3).

15. Système de capteur selon la revendication 14, les éléments de mesure de chaleur étant configurés pour émettre un signal indiquant un contact humain effectué vers les premier, deuxième et troisième capteurs (S1, S2, S3) lorsque le niveau de chaleur est supérieur à un niveau prédéterminé de chaleur, le niveau prédéterminé de chaleur correspondant facultativement à une température corporelle normale d'un être humain.

16. Système de capteur pour un volant (120) d'un véhicule, comprenant :
un premier capteur (S1) disposé à l'intérieur d'une première partie du volant (120) et configuré pour détecter un contact avec une surface latérale avant gauche du volant (120) ;
un deuxième capteur (S2) disposé à l'intérieur d'une deuxième partie du volant (120) séparée de la première partie et configuré pour détecter le contact avec une surface latérale avant droite du volant (120) ; et
un troisième capteur (S3) disposé à l'intérieur d'une troisième partie du volant (120) pour détecter un contact avec une surface arrière du volant (120),
les premier, deuxième et troisième capteurs (S1, S2, S3) étant configurés pour détecter respectivement un contact de l'opérateur du véhicule avec les surfaces latérale avant gauche, avant droite et arrière ;
le système de capteur comprenant en outre des circuits de commande configurés pour utiliser des signaux provenant des premier, deuxième et troisième capteurs (S1, S2, S3) pour indiquer une prise manuelle du volant (120) effectuée par un opérateur du véhicule versus un autre contact d'une partie de corps avec le volant (120) effectué par l'opérateur du véhicule ; et
lorsque les première et deuxième parties sont contactées par une prise manuelle de l'opérateur, les premier, deuxième et troisième capteurs (S1, S2, S3) émettent un signal d'une première intensité de signal, et lorsque les première et deuxième parties sont en contact avec une autre partie du corps de l'opérateur différente d'une prise manuelle ou que les première, deuxième et troisième parties ne sont pas en contact avec l'opérateur, les premier, deuxième et troisième capteurs (S1, S2, S3) émettent un signal d'une deuxième intensité de signal inférieure à la première intensité de signal, et
les premier et deuxième capteurs (S1, S2) étant isolés électriquement l'un de l'autre par une première protection électrique prévue entre eux à l'intérieur du volant (120), et le troisième capteur (S3) étant isolé électriquement des premier et deuxième capteurs (S1, S2) par une deuxième protection électrique prévue entre eux à l'intérieur du volant (120), ou une vitesse de variation du contact effectué avec les premier et
deuxième capteurs (S1, S2) sur une période de temps étant déterminée avec une unité de traitement, afin de déterminer si un contact glissant ou un contact stable est effectué avec le volant (120).

17. Système de capteur pour un volant (120) d'un véhicule, comprenant :
un premier capteur (S1) disposé à l'intérieur d'une première partie du volant (120) et configuré pour détecter un contact avec une surface latérale avant gauche du volant (120) ;
un deuxième capteur (S2) disposé à l'intérieur d'une deuxième partie du volant (120) séparée de la première partie et configuré pour détecter le contact avec une surface latérale avant droite du volant (120) ; et
un troisième capteur (S3) disposé à l'intérieur d'une troisième partie du volant (120) pour détecter un contact avec une surface arrière du volant (120),
les premier, deuxième et troisième capteurs (S1, S2, S3) étant configurés pour détecter respectivement un contact de l'opérateur du véhicule avec les surfaces latérale avant gauche, avant droite et arrière ;
le système de capteur comprenant en outre des circuits de commande configurés pour utiliser des signaux provenant des premier, deuxième et troisième capteurs (S1, S2, S3) pour indiquer une prise manuelle du volant (120) effectuée par un opérateur du véhicule versus un autre contact d'une partie de corps avec le volant (120) effectué par l'opérateur du véhicule ; et
lorsque les première et deuxième parties sont contactées par une prise manuelle de l'opérateur, les premier, deuxième et troisième capteurs (S1, S2, S3) émettent un signal d'une première intensité de signal, et lorsque les première et deuxième parties sont contactées par une autre partie du corps, à savoir un doigt de l'opérateur différente d'une prise manuelle ou que les première, deuxième et troisième parties ne sont pas contactées par l'opérateur, les premier, deuxième et troisième capteurs (S1, S2, S3) émettent un signal d'une deuxième intensité de signal inférieure à la première intensité de signal,
le contact réalisé avec un premier ou deuxième capteur (S1 ou S2) par un doigt du conducteur (100) amenant le capteur (S1 ou S2) à avoir une valeur d'impédance d'approximativement une première valeur d'impédance non nulle et le troisième capteur (S3) à avoir une valeur d'impédance approximativement nulle, et
le contact réalisé avec un premier capteur (S1) ou un deuxième capteur (S2) par une paume du conducteur (100) amenant le premier ou le deuxième capteur (S1 ou S2) à avoir une valeur d'impédance d'approximativement une deuxième valeur d'impédance supérieure à la première valeur d'impédance et le troisième capteur (S3) à avoir une valeur d'impédance d'approximativement la deuxième valeur d'impédance, puisqu'une prise manuelle normale est en contact à la fois avec les surfaces avant et arrière du volant, et
le mode particulier de contact avec les premier et deuxième capteurs (S1, S2 et S3) pouvant être déterminé en conséquence, et
la détermination de valeurs appropriées d'impédances des premier, deuxième et troisième capteurs (S1, S2 et S3) pour déterminer le contact avec le doigt ou le contact avec la paume étant déterminée sur la base de données stockées dans une base de données de données historiques obtenues à partir d'expériences effectuées avec des types connus de touchers humains à des capteurs et des impédances mesurées à partir de ces types connus de touchers humains.
